# EUROPEAN PATENT SPECIFICATION

(11) **EP 2 331 848 B1**
(45) Date of publication and mention of the grant of the patent: **12.03.2014**
(21) Application number: 09811776.5
(22) Date of filing: 03.09.2009
(51) Int. Cl.: F16H 59/68, F16H 59/38, F16H 61/12

(54) **METHOD, ARRANGEMENT AND COMPUTER PROGRAM PRODUCT FOR DETERMINING A STATE OF A GEARBOX**
VERFAHREN, ANORDNUNG UND COMPUTERPROGRAMMPRODUKT ZUR BESTIMMUNG DES ZUSTANDES EINES GETRIEBES
PROCÉDÉ, AGENCEMENT ET PRODUIT DE PROGRAMME INFORMATIQUE PERMETTANT DE DÉTERMINER UN ÉTAT D UNE BOÎTE DE VITESSES

(30) Priority: 08.09.2008 SE 0801924
(43) Date of publication of application: 15.06.2011
(73) Proprietor: Scania CV AB (PUBL), 151 87 Södertälje (SE)
(72) Inventor: HANSON, Mikael, S-125 51 Älvsjö (SE); JUHLIN-DANNFELT, Peter, S-126 36 Hägersten (SE)
(86) International application number: PCT/SE2009/050993
(87) International publication number: WO 2010/027320

(56) References cited:
- EP-A2- 0 364 220
- WO-A1-01/38885
- DE-A1- 19 505 561
- GB-A- 2 389 878
- GB-A- 2 389 878
- US-B1- 6 389 346

## Description

### TECHNICAL FIELD

The present invention relates to a method for improving the performance of a motor vehicle. The invention relates also to a computer programme product comprising programme codes for a computer to implement a method according to the invention. The invention relates also to a computer and a motor vehicle which is equipped with the computer.

### BACKGROUND

Motor vehicles may be equipped with automatic clutches. In such vehicles there is a sensor which indicates whether the vehicle's gearbox is in a neutral position or whether a gear is engaged. However, such sensors may improperly indicate that the vehicle's gearbox is in a neutral position. If a sensor improperly indicates that the vehicle's gearbox is in a neutral position and the vehicle's clutch slips, the result may be undesired consequences such as the vehicle being set in motion, constituting a safety risk. One way of dealing with this problem is to provide a greater number of, and more sophisticated, sensors for indicating whether the vehicle's gearbox is in a neutral position or whether a gear is engaged. This solution results in a higher cost for the vehicle manufacturer. It also entails a more complicated installation of equipment for detecting which position the gearbox is actually in. There is also a need to be able to arrive at a more reliable diagnosis of the state of a gearbox of a motor vehicle.

JP 2002039348 describes a control routine for handling an automatic transmission.

Generic GB-A-2389 878 describes a method and a device for determination of a state of a gearbox.

### SUMMARY OF THE INVENTION

An object of the present invention is to provide a novel and advantageous method for improving the performance of a motor vehicle.

Another object of the invention is to provide a method and computer programme for improving the performance of a motor vehicle.

An object of the invention is to provide an alternative method for improving the performance of a motor vehicle during a starting phase of the vehicle.

A further object of the invention is to provide a method and computer programme for reducing or eliminating a need for extra sensors for detecting an improperly engaged gear in a motor vehicle. An object of the invention is to make it possible to detect improperly engaged gears in a motor vehicle when a clutch closes.

An object of the invention is to increase the probability of correctly determining whether a gear is engaged in a vehicle's gearbox when a clutch of the vehicle's transmission closes and a neutral position of said gearbox is indicated.

These objects are achieved with a method for determining a state of a gearbox in a motor vehicle's driveline when a clutch of said driveline is put into engagement, which method comprises the steps according to claim 1.

By observing during a predetermined period of time the change in the transmission ratio of a motor vehicle and the inertia which is accelerated it is possible to determine a state of the vehicle's gearbox.

A state of the vehicle's gearbox may incorporate the alternatives of gears of the gearbox being engaged or neutral position. It is in many ways advantageous to carry out in a simple manner a test in order to be able to decide whether a vehicle's gearbox has a gear engaged even if sensors indicate that the gearbox is in a neutral position. It is of course important, not least from a safety perspective, to determine with high probability whether a gear is engaged when the vehicle's clutch is about to close.

A step of determining said state of the gearbox on the basis of a torque and an angular acceleration may incorporate the step of establishing a ratio, hereinafter called j, between said torque and angular acceleration. The ratio j defines the moment of inertia.

The method may comprise the step of determining whether said moment of inertia coincides with the moment of inertia of the gearbox input shaft in order thus to determine said state of the gearbox. If the moment of inertia, i.e. the ratio between the engine torque and the angular acceleration of the gearbox input shaft, coincides with the moment of inertia of the gearbox input shaft, it can with high probability be determined that the vehicle's gearbox is in a neutral position.

The method may comprise the step of at least one further determination of the state on the basis of updated values of torque and angular acceleration.. This has the advantage of being able to determine with greater assurance that the gearbox really is in a certain state. A further determination of the state may result in confirmation that a preliminary determination was correct. At least one further determination of the state on the basis of updated values of the torque of the engine and the angular acceleration makes it possible to achieve a more robust method. Should the torque of the engine or the angular acceleration be for any reason incorrect in the first calculation, this can be corrected in one or more subsequent calculations.

The step of using a first angular velocity representing the angular velocity of the gearbox input shaft and a second angular velocity representing the angular velocity of the gearbox output shaft as a basis for determining said state of the gearbox may incorporate the step of establishing a ratio u between the first and second angular velocities. The ratio u is the transmission ratio of the driveline. Sensors already present for detecting the first angular velocity of the gearbox input shaft and the second angular velocity of the gearbox output shaft may be used for inexpensive implementation of the method according to the invention. Such sensors are fairly exact and therefore provide a good basis for determining the actual state of the vehicle's gearbox.

The method may comprise the step of determining whether said ratio changes over a predetermined period of time in order thus to determine said state of the gearbox. A number of pairs of measurements of the first angular velocity and second angular velocity may be made during that period of time. The period of time may be of any desired length. If the ratio u changes over a predetermined period of time, e.g. by a factor of two, it can be determined that a gear of the gearbox is not engaged, i.e. that the gearbox is in a neutral position. If however the transmission ratio defined by said ratio u is substantially constant, it can be assumed that a gear of the gearbox is engaged. If an input shaft to the gearbox rotates but an output shaft from the gearbox does not rotate, the possibility that a gear is engaged can be ruled out.

The method may comprise the step of at least once more determining the state on the basis of updated first and second angular velocities. This has the advantage of being able to determine with greater assurance that the gearbox really is in a certain state. A further determination of the state may result in confirmation that a preliminary determination was correct. A further determination may result in the establishment of changes in the ratio between the first and second angular velocities. Yet further determinations may make it possible for changes in the ratio between the first and second angular velocities to be established with greater assurance. At least one further determination of the state on the basis of updated values of updated first and second angular velocities makes it possible to achieve a more robust method. Should updated first and second angular velocities be for any reason incorrect in the first calculation, this can be corrected in one or more subsequent calculations.

The steps of
- determining said state of the gearbox on the basis of said torque and angular acceleration, and
- determining said state of the gearbox on the basis of said first and second angular velocities, are effected substantially simultaneously. This has the advantage that a determination of a state of the gearbox can be done substantially more quickly than if the steps are performed sequentially. This means in practice that the method for improving the performance of a motor vehicle will not be perceived by a driver as being slow.

The method may comprise the step of using a sensor to detect a neutral state of the gearbox. When a neutral state has been detected and the motor vehicle's clutch begins to close, determination of a state of the vehicle's gearbox is initiated. This means that detection of a neutral state of the gearbox, given that the vehicle's clutch is about to close, will trigger the step of determining the state of the vehicle's gearbox. The result is a reliable initiation of the innovative method.

If the state determined indicates that a gear of the vehicle's gearbox is engaged, the method may comprise the step of:
- taking measures which incorporate constricting the fuel supply to the engine and/or breaking the driveline and/or providing indications to make the driver aware of the state determined. This has the advantage that a driver or user of the vehicle can be informed about the actual state of the vehicle's gearbox. Moreover, measures which incorporate constricting the fuel supply to the engine and/or breaking the vehicle's driveline may prevent the vehicle from beginning to travel on the running surface in an undesired manner.

Determining the state of the gearbox in two ways as indicated above has advantageous synergy effects. If determination that the gearbox has a gear engaged is done in two ways, this provides a good basis for assuming that such really is the case. By analysing the transmission ratio, i.e. the ratio between the rotation speed of the gearbox input shaft and the rotation speed of the gearbox output shaft, it is possible to determine whether the gearbox is in a neutral position. However, it is not possible in all cases to determine with assurance that a gear is engaged. This may be due to its not being possible in certain situations, e.g. when a handbrake of the vehicle is applied.

By analysing the moment of inertia on the basis of the engine torque and the angular acceleration of the gearbox input shaft it is possible to determine whether a clutch of the vehicle is closed or not.

These two ways of determining a state of the vehicle's gearbox are mutually complementary and result in a more correct determination of the state of the gearbox if they are used together.

The method is easy to implement in existing motor vehicles. Software for improving the performance of a motor vehicle according to the invention can be installed in a control unit of the vehicle during the manufacture of the vehicle. A purchaser of the vehicle may thus have the possibility of selecting the function of the method as an option. Alternatively, software comprising programme codes for effecting the innovative method for improving the performance of a motor vehicle may be installed in a control unit of the vehicle on the occasion of upgrading at a service station, in which case the software may be loaded into a memory of the control unit. Implementing the innovative method is therefore inexpensive, particularly since no further sensors or electronic components need to be installed in the vehicle.

Necessary hardware is currently already provided in the vehicle. The invention therefore represents a cost-effective solution to the problem of improving the performance of a motor vehicle.

The method according to the invention results in a more user-friendly vehicle, since drivers, and inexperienced drivers in particular, of the vehicle will experience fewer problems caused by improperly engaged gears at the time of starting the vehicle, with consequently less stress on such drivers.

The method according to the invention represents a robust supporting function which reduces any undesired vehicle behaviour, e.g. undesired vehicle movement during a starting phase.

These objects are also achieved with a device for improving the performance of a motor vehicle, which device comprises the features according to claim 12. Advantageous embodiments are indicated in the dependent claims 13-22.

These objects are also achieved with a motor vehicle which comprises the features according to claim 23. The motor vehicle may be a truck, bus or passenger car.

These objects are also achieved with a computer programme for improving the performance of a motor vehicle, which computer programme comprises programme codes stored on a computer-readable medium in order to cause an electronic control unit or another computer connected to the electronic control unit to perform the steps indicated in claim 25.

Further advantageous embodiments are indicated with reference to claims 26-35.

These objects are also achieved with a computer programme product comprising a programme code stored on a computer-readable medium in order to perform the method steps according to claim 36.

Further objects, advantages and novel features of the present invention will become apparent to one skilled in the art from the following details, and also by putting the invention into practice. Whereas the invention is described below, it should be noted that the invention is not limited to the specific details described. Specialists who have access to the teachings therein will recognise further applications, modifications and incorporations within other fields, which are within the scope of the invention.

### CONCISE DESCRIPTION OF THE DRAWINGS

For a more complete understanding of the present invention and further objects and advantages thereof, the detailed description set out below should be read together with the accompanying drawings, in which the same reference notations denote similar items in the various drawings, and in which:
Figure 1 illustrates schematically a vehicle according to an embodiment of the invention;
Figure 2 illustrates schematically a subsystem for the vehicle depicted in

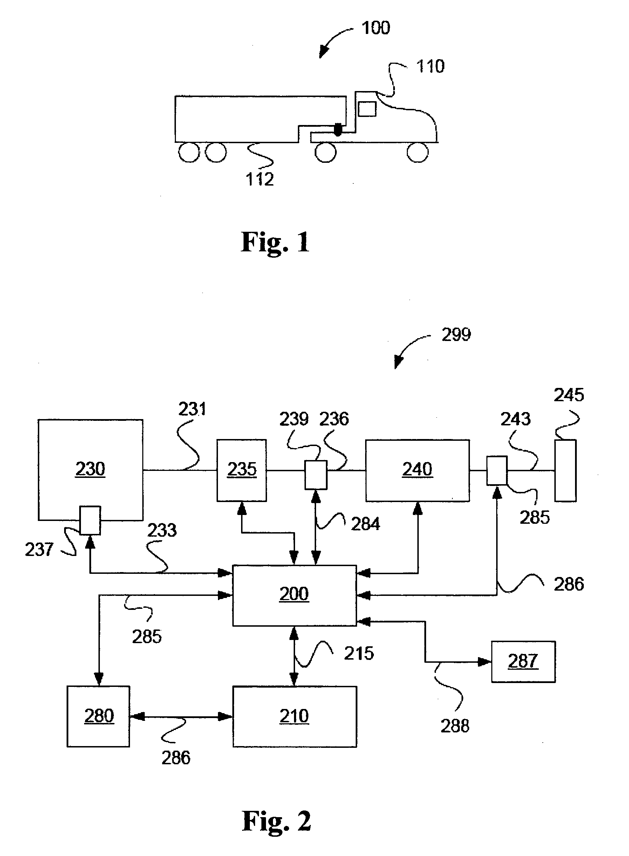

Figure 1, according to an embodiment of the invention;

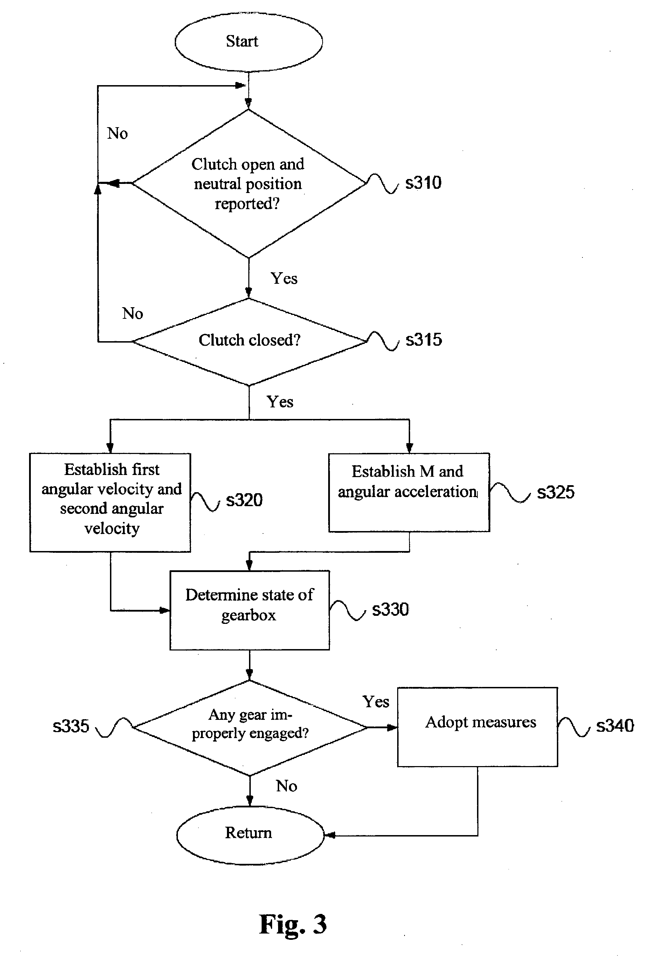

Figure 3 illustrates schematically a flowchart according to an embodiment of the invention; and

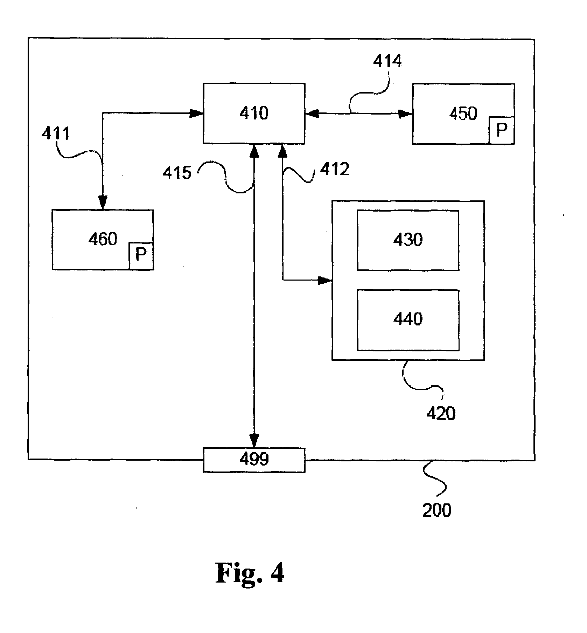

Figure 4 illustrates schematically a computer according to an embodiment of the invention.

### DETAILED DESCRIPTION OF THE DRAWINGS

Figure 1 depicts a side view of a vehicle 100. The exemplified vehicle 100 comprises a tractor unit 110 and a trailer 112. The vehicle may be a heavy vehicle, such as a truck or bus. The vehicle may alternatively be a passenger car. The vehicle 100 is a motor vehicle with automated transmission.

The term "link" refers herein to a communication link which may be a physical connection such as an opto-electronic communication line, or a non-physical connection such as a wireless connection, e.g. a radio link or microwave link.

Figure 2 depicts a subsystem 299 of the vehicle 100. The subsystem 299 is arranged in the tractor unit 110. The subsystem 299 has an engine 230. The engine 230 may be a combustion engine. The combustion engine may be an engine with six cylinders. The combustion engine may be a diesel engine. The engine 230 has a starter motor (not depicted) adapted to starting up the engine upon demand from a driver of the vehicle 100. A driver or other user can initiate both stopping and starting of the vehicle. In particular, a driver can switch off and start the vehicle's engine 230 via an operating means 280 which is connected to an electronic unit 200 via a link 285. The operating means 280 may be a device for accommodating an ignition key, or may be a push-button, which operating means makes it possible for a driver to start and stop the vehicle. Other types of operating means may of course be used, e.g. a device which can be operated by remote control or by voice. The operating means 280 is adapted to generating a starting or stop signal and to sending this signal via the link 285 to the control unit 200. The starting or stop signal is generated on the basis of an action performed by the driver which corresponds to a wish of the driver to start or stop the vehicle. The starting signal is herein called Sstart. The stop signal is herein called Sstop.

The control unit 200 is adapted to receiving a starting signal Sstart. The control unit 200 is adapted to receiving a stop signal Sstop. The control unit 200 is adapted to initiating starting up of the vehicle's engine on the basis of the starting signal Sstart. The control unit 200 is adapted to initiating switching off of the vehicle's engine on the basis of the stop signal Sstop.

The engine 230 has an output shaft 231 connected to a clutch 235. The clutch may for example be of a conventional disc type, such as a two-disc clutch. The clutch 235 is also connected to a shaft 236. The shaft 236 is an input shaft to a gearbox 240. The gearbox 240 has an output shaft 243 adapted to transmitting power to a number of vehicle wheels 245 in a conventional manner. The clutch 235 is adapted to being able to break the power transmission in the driveline which comprises the shaft 231, the clutch 235, the shaft 236, the gearbox 240 and the shaft 243. The control unit 200 according to a version is adapted to controlling both the clutch 235 and the gearbox 240.

A second control unit 210 is arranged for communication with the control unit 200 via a link 215. The second control unit 210 may be detachably connected to the control unit 200. The second control unit 210 may be a control unit external to the vehicle 100. The second control unit 210 may be adapted to performing the innovative method steps according to the invention. The second control unit 210 may be used for transloading software to the control unit 200, particularly software for determining a state of the gearbox on the basis of respective angular velocities of the gearbox input and output shafts, and/or on the basis of torque of the engine and angular acceleration of the gearbox input shaft. The second control unit 210 may alternatively be arranged for communication with the control unit 200 via an internal network in the vehicle.

The second control unit is arranged for communication with the operating means 280 via a link 286.

According to this version, the control unit 200 is also adapted to controlling the engine 230 via a link 233. For this purpose, the control unit 200 is signal-connected to operating means (not depicted), e.g. injection valves for injecting fuel to the engine's cylinders. Separate control units for the engine and the gearbox respectively may of course be provided, but in such cases they need to be connected together to enable them to communicate relevant information to one another.

A first state sensor 239 is provided for the gearbox input shaft 236. The first state sensor 239 is adapted to sending to the control unit 200 a signal representing angular velocity ω₁ of the gearbox input shaft 236. The angular velocity is indicated in radian/s. The first state sensor 239 may also be adapted to sending to the control unit 200 a signal representing angular acceleration ω₁ of the gearbox input shaft 236. The angular acceleration is indicated in radian/s². The first state sensor 239 may be adapted to continuously sending signals representing momentary values of angular velocity ω₁ and/or angular acceleration ω₁. In an alternative version, the state sensor 239 is adapted to continuously sending to the control unit 200 signals which contain information about relative momentary angles of rotation of the gearbox input shaft. The control unit can on the basis of these signals calculate angular velocities ω₁ and angular accelerations ω₁ of the gearbox input shaft 236. In another version, the first state sensor 239 is adapted to sending to the control unit 200 a signal representing angular velocity ω₁ of the gearbox input shaft 236, which signal can be processed by the control unit 200 in order to calculate the angular acceleration ω̇₁.

A second state sensor 285 is provided for the gearbox output shaft 243. The second state sensor 285 is adapted to sending to the control unit 200 a signal representing angular velocity ω₂ of the gearbox output shaft 243. The second state sensor 285 may be adapted to continuously sending to the control unit 200 signals representing momentary values of angular velocity ω₂ of the gearbox output shaft 243. In an alternative version, the state sensor 285 is adapted to continuously sending to the control unit 200 signals which contain information about relative momentary angles of rotation of the gearbox output shaft. The control unit can on the basis of these signals calculate angular velocities ω₂ of the gearbox output shaft 243.

The momentary torque M of the engine 230 may be determined by the control unit 200 in a conventional manner. The torque M is indicated in Nm. This determination of the torque generated by the engine is done by the control unit 200 continuously. This determination of the torque M generated by the engine 230 may be on the basis of the amount of fuel supplied to combustion chambers of the engine 230. Alternatively, the torque of the engine 230 may be detected by a suitable sensor 237 adapted to sending to the control unit 200 via a link 233 a signal containing information about momentary values of the engine's torque.

The control unit 200 is signal-connected to an operating means for power mobilisation (not depicted), e.g. an acceleration control such as an accelerator pedal. A driver of the vehicle can set a desired speed for the engine 230 via the operating means. The invention is particularly suited to situations where the vehicle is stationary on the running surface and the driver is about to start the vehicle and drive off by using the operating means for power mobilisation.

Herein, according to an example of the invention, the innovative method is initiated and controlled by the electronic control unit 200. According to an example, the electronic control unit is a control unit for the gearbox 240. Alternatively, the innovative method is initiated and controlled by the external electronic control unit 210.

A communication terminal 287 with a user interface is provided to make it possible, e.g. for a driver, to communicate with the control unit 200. The communication terminal 287 may have a display unit such as a touchscreen. The communication terminal 287 may display information indicating certain states of the vehicle 100. For example, the communication terminal 200 may display alphanumeric signs or symbols, such as warning messages. These warning messages may contain information about whether the gearbox is in an undesired state, i.e. with a gear in the gearbox actually engaged despite its being indicated that the gearbox 240 is in a neutral position. Such an undesired state of the vehicle's gearbox may occur through defect of a sensor which indicates the state of the gearbox. In this way a driver may become aware that all is not well with some components of the vehicle.

Figure 3 illustrates schematically a flowchart according to an embodiment of the invention.

The method comprises a first method step s310. Step s310 determines whether the clutch is in an open position or not. The open position is a position where the clutch is in a fully open position. Step s310 also determines whether it is detected that the gearbox is in a neutral position or not. This neutral position may be detected by one or more sensors and communicated to a control unit of the vehicle. If it is determined that the clutch is in an open position and that the gearbox is in a neutral position, a subsequent step s315 is performed. If it is determined that the clutch is not in an open position and/or that the gearbox is in a neutral position, step s310 is performed again.

Step s315 determines whether the vehicle's clutch is put into engagement or about to be put into engagement. In other words, it determines whether the vehicle's clutch is about to slide together. The vehicle's clutch is in this mode if it is not in its fully open position. If it is determined that the vehicle's clutch is put into engagement or about to be put into engagement, a subsequent step s325 is executed. According to one embodiment of the invention, the step s320 is then also executed. If it is determined that the vehicle's clutch is not put into engagement or not about to be put into engagement, step s310 is performed again.

Step s325 performs the step of determining the vehicle's engine torque. Step s325 also performs the step of establishing an angular velocity of the gearbox input shaft. After step s325, step s330 is performed.

Step s330 also performs the step of determining said state of the gearbox on the basis of said torque and angular acceleration. This step may incorporate the step of establishing the ratio between said torque and angular acceleration in order to calculate a moment of inertia j. The moment of inertia j is indicated in kgm. By calculating the moment of inertia j and determining whether it coincides with the moment of inertia of the gearbox input shaft it is possible to determine with high probability whether the gearbox is in a neutral gear position. After step s330, a subsequent step s335 is performed.

Step s320 performs the step of establishing a first angular velocity of the gearbox input shaft. Step s320 also performs the step of establishing a second angular velocity of the gearbox output shaft. After step s320, a step s330 is performed.

Step s330 performs the step of determining a state of the gearbox on the basis of said first and second angular velocities. This step may incorporate the step of establishing the ratio between the first and second angular velocities in order to calculate the transmission ratio of the vehicle's transmission. By calculating the change in the transmission ratio over any desired period of time it is possible to determine whether the gearbox is in a neutral gear position or not.

After step s330, a subsequent step s335 is performed. Step s335 determines whether a gear in the vehicle's gearbox is improperly engaged or not. If step s330 determines that a gear is engaged in the vehicle's gearbox, bearing in mind that step s310 has determined that a neutral position of the vehicle's gearbox has been reported, it is possible to determine whether a gear has been improperly engaged. If it is determined that a gear has been improperly engaged, a subsequent step s340 is performed. If it is determined that a gear has not been improperly engaged, the method reverts to step s310.

Step s340 performs the step of taking measures which may incorporate constricting the fuel supply to the engine and/or breaking the driveline and/or using indications to make the driver aware of the state determined. After step s340, the method returns to step s310.

Figure 4 depicts a diagram of a version of a device 200. The control units described with reference to Figure 2 may in a version comprise the device 200. The device 200 comprises a non-volatile memory 420, a data processing unit 410 and a read/write memory 450. The non-volatile memory 420 has a first memory element 430 in which a computer programme, e.g. an operating system, is stored in order to control the function of the device 200. The device 200 further comprises a bus controller, a serial communication port, I/O means, an A/D converter, a time and date input and transfer unit, an event counter and an interruption controller (not depicted). The non-volatile memory 420 also has a second memory element 440.

A computer programme P comprising routines for determination of states of a gearbox of driveline of a motor vehicle when a clutch of said driveline is put into engagement is provided. The programme P may be stored in an executable form or compressed form in a memory 460 and/or in a read/write memory 450.

Where it is stated that the data processing unit 410 performs a certain function, it means that the data processing unit 410 effects a certain part of the programme which is stored in the memory 460 or a certain part of the programme which is stored in the read/write memory 450.

The data processing unit 410 can communicate with a data port 499 via a data bus 415. The non-volatile memory 420 is intended for communication with the data processing unit 410 via a data bus 412. The separate memory 460 is intended to communicate with the data processing unit 410 via a data bus 411. The read/write memory 450 is intended to communicate with the data processing unit 410 via a data bus 414.

When data are received on the data port 499, they are stored temporarily in the second memory element 440. When input data received have been temporarily stored, the data processing unit 410 will be ready to effect execution of codes in a manner described above. According to a version, information signals received on the data port 490 contain information generated by, for example, the sensors 237, 239 and 285 (see Figure 2). The information refers to a first angular velocity of the gearbox input shaft, a second angular velocity of the gearbox output shaft, the vehicle's engine torque and an angular acceleration of the gearbox input shaft. This information can be used by the device 200 for determination of states of a gearbox of a driveline of a motor vehicle at the putting into engagement of a clutch of said driveline.

Parts of the methods herein described can be effected by the device 200 by means of the data processing unit 410 which runs the programme stored in the memory 460 or the read/write memory 450. When the device 200 runs the programme, methods herein described are executed.

The foregoing description of the preferred embodiments of the present invention is provided for illustration and description purposes. It is not intended to be exhaustive or to limit the invention to the variants described. Many modifications and variants will obviously be apparent to one skilled in the art. The embodiments have been chosen and described in order best to make clear the principles of the invention and its practical applications and hence to make it possible for one skilled in the art to understand the invention for various embodiments and with the various modifications which are appropriate to the intended use.

## Claims

1. A method for determination of a state of a gearbox (240) of a driveline at the putting into engagement of a clutch (235) of said driveline, said state incorporating the alternatives of gears of the gearbox being engaged and neutral position, **characterised by** the steps of:
- establishing (s325) the engine torque (M);
- establishing (s325) an angular acceleration (ω̇₁) of the gearbox input shaft (236);
- determining (s330) said state of the gearbox on the basis of said torque (M) and angular acceleration (ω̇₁);
and the steps of:
- establishing (s320) a first angular velocity (*ω*₁) representing the angular velocity of the gearbox input shaft (236);
- establishing (s320) a second angular velocity (*ω*₂) representing the angular velocity of the gearbox output shaft (243);
- determining (s330) said state of the gearbox on the basis of said first and second angular velocities (*ω*₁,*ω*₂);
whereby the steps of:
- determining said state of the gearbox on the basis of said first and second angular velocities, and
- determining said state of the gearbox on the basis of said torque and angular acceleration,
are performed substantially simultaneously.

2. A method according to claim 1, whereby the step of determining (s330) said state of the gearbox on the basis of said first and second angular velocities (*ω*₁,*ω*₂) incorporates the step of establishing a ratio (u) between the first and second angular velocities.

3. A method according to claim 2, comprising the step of determining whether said ratio (u) changes over a predetermined period of time, in order thus to determine said state of the gearbox.

4. A method according to any one of claims1-3, comprising the step of at least once more determining the state on the basis of updated first and second angular velocities.

5. A method according to any one of the foregoing claims, whereby the step of determining said state of the gearbox on the basis of said torque (M) and angular acceleration (ω̇₁) incorporates the step of establishing the ratio (j) between said torque (M) and angular acceleration (ω̇₁).

6. A method according to claim 5, comprising the step of determining whether said ratio (j) coincides with the moment of inertia of the gearbox input shaft, in order thus to determine said state of the gearbox.

7. A method according to any one of the foregoing claims, comprising the step of at least once more determining the state on the basis of updated torque (M) and angular acceleration (ω̇₁) values.

8. A method according to any one of the foregoing claims, comprising the step of using a sensor to detect a neutral state of the gearbox.

9. A method according to any one of the foregoing claims, in which the state determined indicates that a gear of the vehicle's gearbox is engaged, comprising the step of taking measures (s340) which incorporate constricting the fuel supply to the engine and/or breaking the driveline and/or providing indications to make the driver aware of the state determined.

10. A device for determination a state of a gearbox (240) of a driveline of a vehicle (100) at the putting into engagement of a clutch (235) of said driveline, said state incorporating the alternatives of gears of the gearbox being engaged and neutral position, **characterised by**
- means (200; 210; 237) for establishing the vehicle's engine torque (M);
- means (200; 210; 239) for establishing an angular acceleration (ω̇₁) of the gearbox input shaft (236);
- means (200; 210) for determining said state of the gearbox on the basis of said torque (M) and angular acceleration (ω̇₁);
and
- means (239) for establishing a first angular velocity (*ω*₁) representing the angular velocity of the gearbox input shaft (236);
- means (285) for establishing a second angular velocity (*ω*₂) representing the angular velocity of the gearbox output shaft (243);
- means (200; 210) for determining said state of the gearbox on the basis of said first and second angular velocities (*ω*₁,*ω*₂);
and
- means (200; 210) for substantially simultaneously performing the steps of;
- determining said state of the gearbox on the basis of said first and second angular velocities (*ω*₁,*ω*₂), and
- determining said state of the gearbox on the basis of said torque (M) and angular acceleration (ω̇₁).

11. A device according to claim 10, comprising means (200; 210) for establishing a ratio (u) between the first and second angular velocities (*ω*₁,*ω*₂).

12. A device according to claim 11, comprising means (200; 210) for determining whether said ratio changes over a predetermined period of time, in order thus to determine said state of the gearbox.

13. A device according to any one of the claims 10-12, comprising means (200; 210) for at least once more determining the state on the basis of updated first and second angular velocities.

14. A device according to any one of the claims 10-13, comprising means (200; 210) for establishing a ratio (j) between said torque (M) and angular acceleration (ω̇₁).

15. A device according to claim 14, comprising means (200; 210) for determining whether said ratio (j) coincides with the moment of inertia of the gearbox input shaft, in order thus to determine said state of the gearbox.

16. A device according to any one of claims 10-15, comprising means (200; 210) for at least once more determining the state on the basis of updated torque (M) and angular acceleration (ω̇₁) values.

17. A device according to any one of the claims 10-16, comprising means for detecting a neutral state of the gearbox.

18. A device according to any one of claims 10-17, comprising means (200; 210) for responding, if the state determined indicates that a gear of the vehicle's gearbox is engaged, by taking measures which incorporate constricting the fuel supply to the engine and/or breaking the driveline and/or providing indications to make the driver aware of the state determined.

19. A motor vehicle (100; 110) comprising a device according to any one of claims 10-18.

20. A motor vehicle (100; 110) according to claim 19, which vehicle is a truck, bus or passenger car.

21. A computer programme (P) for determination of a state of a gearbox (240) of a driveline of a vehicle (100) at the putting into engagement of a clutch (235) of said driveline, said state incorporating the alternatives of gears of the gearbox being engaged and neutral position, which computer programme (P) comprises programme codes stored on a computer-readable medium for causing an electronic control unit (200) or another computer (210) connected to the electronic control unit to perform the steps of:
- establishing the vehicle's engine torque (M);
- establishing an angular acceleration (ω̇₁) of the gearbox input shaft (236);
- determining said state of the gearbox on the basis of said torque (M) and angular acceleration (ω̇₁);
and the steps of:
- establishing a first angular velocity (*ω*₁) representing the angular velocity of the gearbox input shaft (236);
- establishing a second angular velocity (*ω*₂) representing the angular velocity of the gearbox output shaft (243) ;
- determining said state of the gearbox on the basis of said first and second angular velocities (*ω*₁,*ω*₂);
whereby the steps of
- determining said state of the gearbox on the basis of said first and second angular velocities (*ω*₁,*ω*₂), and
- determining said state of the gearbox on the basis of said torque (M) and angular acceleration (ω̇₁), are performed substantially simultaneously.

22. A computer programme (P) according to claim 21, whereby the step of determining said state of the gearbox on the basis of said first and second angular velocities (*ω*₁,*ω*₂) incorporates the step of establishing a ratio (u) between the first and second angular velocities (*ω*₁,*ω*₂).

23. A computer programme (P) according to claim 22, comprising the step of determining whether said ratio changes over a predetermined period of time, in order thus to determine said state of the gearbox.

24. A computer programme (P) according to any one of claims 21-23, comprising the step of at least once more determining the state on the basis of updated first and second angular velocities (*ω*₁,*ω*₂).

25. A computer programme (P) according to any one of claims 21-24, in which the step of determining said state of the gearbox on the basis of said torque and angular acceleration incorporates the step of establishing the ratio (j) between said torque (M) and angular acceleration (ω̇₁).

26. A computer programme (P) according to claim 25, comprising the step of determining whether said ratio (j) coincides with the moment of inertia of the gearbox input shaft, in order thus to determine said state of the gearbox.

27. A computer programme (P) according to any one of claims 21-26, comprising the step of at least once more determining the state on the basis of updated torque (M) and angular acceleration (ω̇₁) values.

28. A computer programme (P) according to any one of claims 21-27, comprising the step of detecting a neutral state of the gearbox.

29. A computer programme (P) according to any one of claims 21-28, if the state determined indicates that a gear of the vehicle's gearbox is engaged, comprising the step of taking measures which incorporate constricting the fuel supply to the engine and/or breaking the driveline and/or providing indications to make the driver aware of the state determined.

30. A computer programme product comprising a programme code stored on a computer-readable medium for performing the method steps according to claims 1-9, which computer programme is run on an electronic control unit (200) or another computer (210) connected to the electronic control unit.

## Patentansprüche

1. Verfahren zum Bestimmen eines Zustands eines Getriebes (240) eines Antriebsstrangs beim Schließen einer Kupplung (235) des Antriebsstrangs, wobei der Zustand als Alternativen umfasst, dass Gänge des Getriebes eingelegt sind, sowie eine Leerlaufstellung,
**gekennzeichnet durch** die Schritte:
- Ermitteln (s325) des Motordrehmoments (M);
- Ermitteln (s325) einer Winkelbeschleunigung (ω̇₁) der Getriebeeingangswelle (236);
- Bestimmen (s330) des Zustands des Getriebes auf der Grundlage des Drehmoments (M) und der Winkelbeschleunigung (ω̇₁);
und die Schritte:
- Ermitteln (s320) einer ersten Winkelgeschwindigkeit (ω₁), die die Winkelgeschwindigkeit der Getriebeeingangswelle (236) darstellt;
- Ermitteln (s320) einer zweiten Winkelgeschwindigkeit (ω₂), die die Winkelgeschwindigkeit der Getriebeausgangswelle (243) darstellt;
- Bestimmen (s330) des Zustands des Getriebes auf der Grundlage der ersten und zweiten Geschwindigkeit (ω₁,ω₂);
wobei die Schritte:
- Bestimmen des Zustands des Getriebes auf der Grundlage der ersten und zweiten Winkelgeschwindigkeit und
- Bestimmen des Zustands des Getriebes auf der Grundlage des Drehmoments und der Winkelbeschleunigung
im Wesentlichen gleichzeitig ausgeführt werden.

2. Verfahren nach Anspruch 1,
wobei der Schritt des Bestimmens (s330) des Zustands des Getriebes auf der Grundlage der ersten und zweiten Winkelgeschwindigkeit (ω₁,ω₂) den Schritt eines Ermittelns eines Verhältnisses (u) zwischen der ersten und zweiten Winkelgeschwindigkeit umfasst.

3. Verfahren nach Anspruch 2,
umfassend den Schritt eines Bestimmens, ob sich das Verhältnis (u) über eine vorbestimmte Zeitdauer ändert, um dadurch den Zustand des Getriebes zu bestimmen.

4. Verfahren nach einem der Ansprüche 1 bis 3,
umfassend den Schritt eines zumindest noch einmaligen Bestimmens des Zustands auf der Grundlage von aktualisierten ersten und zweiten Winkelgeschwindigkeiten.

5. Verfahren nach einem der vorangehenden Ansprüche,
wobei der Schritt des Bestimmens des Zustands des Getriebes auf der Grundlage des Drehmoments (M) und der Winkelbeschleunigung (ω̇₁) den Schritt eines Ermittelns des Verhältnisses (j) zwischen dem Drehmoment (M) und der Winkelbeschleunigung (ω̇₁) umfasst.

6. Verfahren nach Anspruch 5,
umfassend den Schritt eines Bestimmens, ob das Verhältnis (j) mit dem Trägheitsmoment der Getriebeeingangswelle übereinstimmt, um dadurch den Zustand des Getriebes zu bestimmen.

7. Verfahren nach einem der vorangehenden Ansprüche,
umfassend den Schritt eines zumindest noch einmaligen Bestimmens des Zustands auf der Grundlage von aktualisierten Werten des Drehmoments (M) und der Winkelbeschleunigung (ω̇₁).

8. Verfahren nach einem der vorangehenden Ansprüche,
umfassend den Schritt eines Verwendens eines Sensors, um einen Leerlaufzustand des Getriebes zu erfassen.

9. Verfahren nach einem der vorangehenden Ansprüche,
in dem der bestimmte Zustand angibt, dass ein Gang des Getriebes des Fahrzeugs eingelegt ist, umfassend den Schritt eines Durchführens von Maßnahmen (s340), die ein Einschränken der Kraftstoffzufuhr zu dem Motor und/oder Unterbrechen des Antriebsstrangs und/oder Bereitstellen von Anzeigen, um den Fahrer auf den bestimmten Zustand aufmerksam zu machen, umfassen.

10. Vorrichtung zum Bestimmen eines Zustands eines Getriebes (240) eines Antriebsstrangs eines Fahrzeugs (100) beim Schließen einer Kupplung (235) des Antriebsstrangs, wobei der Zustand als Alternativen umfasst, dass Gänge des Getriebes eingelegt sind, sowie eine Leerlaufstellung,
**gekennzeichnet durch**
- Mittel (200; 210; 237) zum Ermitteln des Motordrehmoments (M) des Fahrzeugs;
- Mittel (200; 210; 239) zum Ermitteln einer Winkelbeschleunigung (ω̇₁) der Getriebeeingangswelle (236);
- Mittel (200; 210) zum Bestimmen des Zustands des Getriebes auf der Grundlage des Drehmoments (M) und der Winkelbeschleunigung (ω̇₁);
und
- Mittel (239) zum Ermitteln einer ersten Winkelgeschwindigkeit (ω₁), die die Winkelgeschwindigkeit der Getriebeeingangswelle (236) darstellt;
- Mittel (285) zum Ermitteln einer zweiten Winkelgeschwindigkeit (ω₂), die die Winkelgeschwindigkeit der Getriebeausgangswelle (243) darstellt;
- Mittel (200; 210) zum Bestimmen des Zustands des Getriebes auf der Grundlage der ersten und zweiten Winkelgeschwindigkeit (ω₁,ω₂);
und
- Mittel (200; 210) zum im Wesentlichen gleichzeitigen Ausführen der Schritte:
- Bestimmen des Zustands des Getriebes auf der Grundlage der ersten und zweiten Winkelgeschwindigkeit (ω₁,ω₂), und
- Bestimmen des Zustands des Getriebes auf der Grundlage des Drehmoments (M) und der Winkelbeschleunigung (ω̇₁).

11. Vorrichtung nach Anspruch 10, umfassend
Mittel (200; 210) zum Ermitteln eines Verhältnisses (u) zwischen der ersten und zweiten Winkelgeschwindigkeit (ω₁,ω₂).

12. Vorrichtung nach Anspruch 11, umfassend
Mittel (200; 210) zum Bestimmen, ob sich das Verhältnis über eine vorbestimmte Zeitdauer ändert, um dadurch den Zustand des Getriebes zu bestimmen.

13. Vorrichtung nach einem der Ansprüche 10 bis 12, umfassend
Mittel (200; 210) zum zumindest noch einmaligen Bestimmen des Zustands auf der Grundlage von aktualisierten ersten und zweiten Winkelgeschwindigkeiten.

14. Vorrichtung nach einem der Ansprüche 10 bis 13, umfassend
Mittel (200; 210) zum Ermitteln eines Verhältnisses (j) zwischen dem Drehmoment (M) und der Winkelbeschleunigung (ω̇₁).

15. Vorrichtung nach Anspruch 14, umfassend
Mittel (200; 210) zum Bestimmen, ob das Verhältnis (j) mit dem Trägheitsmoment der Getriebeeingangswelle übereinstimmt, um dadurch den Zustand des Getriebes zu bestimmen.

16. Vorrichtung nach einem der Ansprüche 10 bis 15, umfassend
Mittel (200; 210) zum zumindest noch einmaligen Bestimmen des Zustands auf der Grundlage von aktualisierten Werten des Drehmoments (M) und der Winkelbeschleunigung (ω̇₁).

17. Vorrichtung nach einem der Ansprüche 10 bis 16, umfassend
Mittel zum Bestimmen eines Leerlaufs des Getriebes.

18. Vorrichtung nach einem der Ansprüche 10 bis 17, umfassend
Mittel (200; 210) zum Antworten, wenn der bestimmte Zustand angibt, dass ein Gang des Getriebes des Fahrzeugs eingelegt ist, durch Durchführen von Maßnahmen, die ein Einschränken der Kraftstoffzufuhr zu dem Motor und/oder Unterbrechen des Antriebsstrangs und/oder Bereitstellen von Anzeigen, um den Fahrer auf den bestimmten Zustand aufmerksam zu machen, umfassen.

19. Kraftfahrzeug (100; 110) umfassend eine Vorrichtung nach einem der Ansprüche 10 bis 18.

20. Kraftfahrzeug (100; 110) nach Anspruch 19, wobei das Fahrzeug ein Lastkraftwagen, ein Bus oder ein Personenkraftwagen ist.

21. Computerprogramm (P) zum Bestimmen eines Zustands eines Getriebes (240) eines Antriebsstrangs eines Fahrzeugs (100) beim Schließen einer Kupplung (235) des Antriebsstrangs, wobei der Zustand als Alternativen umfasst, dass Gänge des Getriebes eingelegt sind, sowie eine Leerlaufstellung, wobei das Computerprogramm (P) auf einem computerlesbaren Medium gespeicherte Programmkodes zum Veranlassen einer elektronischen Steuereinheit (200) oder eines anderen, mit der elektronischen Steuereinheit verbundenen Computers (210), die folgenden Schritte auszuführen:
- Ermitteln des Motordrehmoments (M);
- Ermitteln einer Winkelbeschleunigung (ω̇₁) der Getriebeeingangswelle (236);
- Bestimmen des Zustands des Getriebes auf der Grundlage des Drehmoments (M) und der Winkelbeschleunigung (ω̇₁);
und die Schritte:
- Ermitteln einer ersten Winkelgeschwindigkeit (ω₁), die die Winkelgeschwindigkeit der Getriebeeingangswelle (236) darstellt;
- Ermitteln einer zweiten Winkelgeschwindigkeit (ω₂), die die Winkelgeschwindigkeit der Getriebeausgangswelle (243) darstellt;
- Bestimmen des Zustands des Getriebes auf der Grundlage der ersten und zweiten Geschwindigkeit (ω₁,ω₂);
wobei die Schritte:
- Bestimmen des Zustands des Getriebes auf der Grundlage der ersten und zweiten Winkelgeschwindigkeit und
- Bestimmen des Zustands des Getriebes auf der Grundlage des Drehmoments (M) und der Winkelbeschleunigung (ω̇₁)
im Wesentlichen gleichzeitig ausgeführt werden.

22. Computerprogramm (P) nach Anspruch 21,
wobei der Schritt des Bestimmens des Zustands des Getriebes auf der Grundlage der ersten und zweiten Winkelgeschwindigkeit (ω₁,ω₂) den Schritt eines Ermittelns eines Verhältnisses (u) zwischen der ersten und zweiten Winkelgeschwindigkeit (ω₁,ω₂) umfasst.

23. Computerprogramm (P) nach Anspruch 22,
umfassend den Schritt eines Bestimmens, ob sich das Verhältnis über eine vorbestimmte Zeitdauer ändert, um dadurch den Zustand des Getriebes zu bestimmen.

24. Computerprogramm (P) nach einem der Ansprüche 21 bis 23,
umfassend den Schritt eines zumindest noch einmaligen Bestimmens des Zustands auf der Grundlage von aktualisierten ersten und zweiten Winkelgeschwindigkeiten (ω_{1,}ω₂).

25. Computerprogramm (P) nach einem der Ansprüche 21 bis 24,
wobei der Schritt des Bestimmens des Zustands des Getriebes auf der Grundlage des Drehmoments und der Winkelbeschleunigung den Schritt eines Ermittelns des Verhältnisses (j) zwischen dem Drehmoment (M) und der Winkelbeschleunigung (ω̇₁) umfasst.

26. Computerprogramm (P) nach Anspruch 25,
umfassend den Schritt eines Bestimmens, ob das Verhältnis (j) mit dem Trägheitsmoment der Getriebeeingangswelle übereinstimmt, um dadurch den Zustand des Getriebes zu bestimmen.

27. Computerprogramm (P) nach einem der Ansprüche 21 bis 26,
umfassend den Schritt eines zumindest noch einmaligen Bestimmens des Zustands auf der Grundlage von aktualisierten Werten des Drehmoments (M) und der Winkelbeschleunigung (ω̇₁).

28. Computerprogramm (P) nach einem der Ansprüche 21 bis 27,
umfassend den Schritt eines Erfassens eines Leerlaufzustands des Getriebes.

29. Computerprogramm (P) nach einem der Ansprüche 21 bis 28,
für den Fall, dass der bestimmte Zustand angibt, dass ein Gang des Getriebes des Fahrzeugs eingelegt ist, umfassend den Schritt eines Durchführens von Maßnahmen, die ein Einschränken der Kraftstoffzufuhr zu dem Motor und/oder Unterbrechen des Antriebsstrangs und/oder Bereitstellen von Anzeigen, um den Fahrer auf den bestimmten Zustand aufmerksam zu machen, umfassen.

30. Computerprogrammprodukt umfassend einen auf einem computerlesbaren Medium gespeicherten Programmkode zum Ausführen der Verfahrensschritte nach den Ansprüchen 1 bis 9, wobei das Computerprogramm auf einer elektronischen Steuereinheit (200) oder einem anderen, mit der elektronischen Steuereinheit verbundenen Computer (210) ausgeführt wird.

## Revendications

1. Procédé pour la détermination d'un état d'une boîte de vitesses (240) d'un train d'entraînement lors de la mise en prise d'un embrayage (235) dudit train d'entraînement, ledit état incorporant les alternatives des vitesses de la boîte de vitesses qui sont en position en prise et neutre, **caractérisé par** les étapes consistant à :
- établir (s325) le couple moteur (M) ;
- établir (s325) une accélération angulaire (ω̇₁) de l'arbre d'entrée de boîte de vitesses (236) ;
- déterminer (s330) ledit état de la boîte de vitesses en fonction dudit couple (M) et de ladite accélération angulaire (ω̇₁) ;
et les étapes consistant à :
- établir (s320) une première vitesse angulaire (ω₁) représentant la vitesse angulaire de l'arbre d'entrée de boîte de vitesses (236) ;
- établir (s320) une deuxième vitesse angulaire (ω₂) représentant la vitesse angulaire de l'arbre de sortie de boîte de vitesses (243) ;
- déterminer (s330) ledit état de la boîte de vitesses en fonction desdites première et deuxième vitesses angulaires (ω₁,ω₂) ;
grâce à quoi les étapes consistant à :
- déterminer ledit état de la boîte de vitesses en fonction desdites première et deuxième vitesses angulaires, et
- déterminer ledit état de la boîte de vitesses en fonction dudit couple et de ladite accélération angulaire,
sont effectuées sensiblement simultanément.

2. Procédé selon la revendication 1, grâce auquel l'étape de détermination (s330) dudit état de la boîte de vitesses en fonction desdites première et deuxième vitesses angulaires (ω₁, ω₂) incorpore l'étape d'établissement d'un rapport (u) entre les première et deuxième vitesses angulaires.

3. Procédé selon la revendication 2, comprenant l'étape de détermination du fait que ledit rapport (u) change ou non au cours d'une période de temps prédéterminée, de façon à déterminer ainsi ledit état de la boîte de vitesses.

4. Procédé selon l'une quelconque des revendications 1 à 3, comprenant l'étape de détermination au moins une fois de plus de l'état en fonction de première et deuxième vitesses angulaires remises à jour.

5. Procédé selon l'une quelconque des revendications précédentes, grâce auquel l'étape de détermination dudit état de la boîte de vitesses en fonction dudit couple (M) et de ladite accélération angulaire (ω̇₁) incorpore l'établissement du rapport (j) entre ledit couple (M) et ladite accélération angulaire (ω̇₁).

6. Procédé selon la revendication 5, comprenant l'étape de détermination du fait que ledit rapport (j) coïncide ou non avec le moment d'inertie de l'arbre d'entrée de boîte de vitesses, de façon à déterminer ainsi ledit état de la boîte de vitesses.

7. Procédé selon l'une quelconque des revendications précédentes, comprenant l'étape de détermination au moins une fois de plus de l'état en fonction des valeurs de couple (M) et d'accélération angulaire (ω̇₁) remises à jour.

8. Procédé selon l'une quelconque des revendications précédentes, comprenant l'étape d'utilisation d'un capteur pour détecter un état neutre de la boîte de vitesses.

9. Procédé selon l'une quelconque des revendications précédentes, dans lequel l'état déterminé indique qu'une vitesse de la boîte de vitesses du véhicule est en prise, comprenant l'étape consistant à prendre des mesures (s340) qui incorporent l'étranglement de l'alimentation en carburant au moteur et/ou l'interruption du train d'entraînement et/ou la délivrance d'indications pour rendre le conducteur conscient de l'état déterminé.

10. Dispositif pour la détermination d'un état d'une boîte de vitesses (240) d'un train d'entraînement d'un véhicule (100) lors de la mise en prise d'un embrayage (235) dudit train d'entraînement, ledit état incorporant les alternatives des vitesses de la boîte de vitesses qui sont en position en prise et neutre, **caractérisé par** :
- des moyens (200 ; 210 ; 237) pour établir le couple moteur (M) du véhicule ;
- des moyens (200 ; 210 ; 239) pour établir une accélération angulaire (ω̇₁) de l'arbre d'entrée de boîte de vitesses (236) ;
- des moyens (200 ; 210) pour déterminer ledit état de la boîte de vitesses en fonction dudit couple (M) et de ladite accélération angulaire (ω̇₁) ;
et
- des moyens (239) pour établir une première vitesse angulaire (ω₁) représentant la vitesse angulaire de l'arbre d'entrée de boîte de vitesses (236) ;
- des moyens (285) pour établir une deuxième vitesse angulaire (ω₂) représentant la vitesse angulaire de l'arbre de sortie de boîte de vitesses (243) ;
- des moyens (200 ; 210) pour déterminer ledit état de la boîte de vitesses en fonction desdites première et deuxième vitesses angulaires (ω_{1,}ω₂) ;
et
- des moyens (200 ; 210) pour effectuer sensiblement simultanément les étapes consistant à :
- déterminer ledit état de la boîte de vitesses en fonction desdites première et deuxième vitesses angulaires (ω₁,ω₂), et
- déterminer ledit état de la boîte de vitesses en fonction dudit couple (M) et de ladite accélération angulaire (ω̇₁).

11. Dispositif selon la revendication 10, comprenant des moyens (200 ; 210) pour établir un rapport (u) entre les première et deuxième vitesses angulaires (ω₁,ω₂).

12. Dispositif selon la revendication 11, comprenant des moyens (200 ; 210) pour déterminer si ledit rapport change ou non au cours d'une période de temps prédéterminée, de façon à déterminer ainsi ledit état de la boîte de vitesses.

13. Dispositif selon l'une quelconque des revendications 10 à 12, comprenant des moyens (200 ; 210) pour déterminer au moins une fois de plus l'état en fonction de première et deuxième vitesses angulaires remises à jour.

14. Dispositif selon l'une quelconque des revendications 10 à 13, comprenant des moyens (200 ; 210) pour établir un rapport (j) entre ledit couple (M) et ladite accélération angulaire (ω̇₁).

15. Dispositif selon la revendication 14, comprenant des moyens (200 ; 210) pour déterminer si ledit rapport (j) coïncide ou non avec le moment d'inertie de l'arbre d'entrée de boîte de vitesses, de façon à déterminer ainsi ledit état de la boîte de vitesses.

16. Dispositif selon l'une quelconque des revendications 10 à 15, comprenant des moyens (200 ; 210) pour déterminer au moins une fois de plus l'état en fonction des valeurs de couple (M) et d'accélération angulaire (ω̇₁) remises à jour.

17. Dispositif selon l'une quelconque des revendications 10 à 16, comprenant des moyens pour détecter un état neutre de la boîte de vitesses.

18. Dispositif selon l'une quelconque des revendications 10 à 17, comprenant des moyens (200 ; 210) pour répondre, si l'état déterminé indique qu'une vitesse de la boîte de vitesses du véhicule est en prise, par la prise de mesures qui incorporent l'étranglement de l'alimentation en carburant au moteur et/ou l'interruption du train d'entraînement et/ou la délivrance d'indications pour rendre le conducteur conscient de l'état déterminé.

19. Véhicule à moteur (100 ; 110) comprenant un dispositif selon l'une quelconque des revendications 10 à 18.

20. Véhicule à moteur (100 ; 110) selon la revendication 19, ce véhicule étant un camion, un autocar ou une automobile pour passagers.

21. Programme informatique (P) pour la détermination d'un état d'une boîte de vitesses (240) d'un train d'entraînement d'un véhicule (100) lors de la mise en prise d'un embrayage (235) dudit train d'entraînement, ledit état incorporant les alternatives des vitesses de la boîte de vitesses qui sont en position en prise et neutre, ce programme informatique (P) comprenant des codes de programme mémorisés sur un support lisible par un ordinateur afin de faire effectuer à une unité de commande électronique (200) ou à un autre ordinateur (210) connecté à l'unité de commande électronique les étapes consistant à :
- établir le couple moteur (M) du véhicule ;
- établir une accélération angulaire (ω̇₁) de l'arbre d'entrée de boîte de vitesses (236) ;
- déterminer ledit état de la boîte de vitesses en fonction dudit couple (M) et de ladite accélération angulaire (ω̇₁) ;
et les étapes consistant à :
- établir une première vitesse angulaire (ω₁) représentant la vitesse angulaire de l'arbre d'entrée de boîte de vitesses (236) ;
- établir une deuxième vitesse angulaire (ω₂) représentant la vitesse angulaire de l'arbre de sortie de boîte de vitesses (243) ;
- déterminer ledit état de la boîte de vitesses en fonction desdites première et deuxième vitesses angulaires (ω₁,ω₂) ;
grâce à quoi les étapes consistant à :
- déterminer ledit état de la boîte de vitesses en fonction desdites première et deuxième vitesses angulaires (ω₁,ω₂), et
- déterminer ledit état de la boîte de vitesses en fonction dudit couple (M) et de ladite accélération angulaire (ω̇₁), sont effectuées sensiblement simultanément.

22. Programme informatique (P) selon la revendication 21, grâce auquel l'étape de détermination dudit état de la boîte de vitesses en fonction desdites première et deuxième vitesses angulaires (ω₁, ω₂) incorpore l'étape d'établissement d'un rapport (u) entre les première et deuxième vitesses angulaires (ω₁,ω₂).

23. Programme informatique (P) selon la revendication 22, comprenant l'étape de détermination du fait que ledit rapport change ou non au cours d'une période de temps prédéterminée, de façon à déterminer ainsi ledit état de la boîte de vitesses.

24. Programme informatique (P) selon l'une quelconque des revendications 21 à 23, comprenant l'étape de détermination au moins une fois de plus de l'état en fonction de première et deuxième vitesses angulaires remises à jour (ω₁,ω₂).

25. Programme informatique (P) selon l'une quelconque des revendications 21 à 24, dans lequel l'étape de détermination dudit état de la boîte de vitesses en fonction dudit couple et de ladite accélération angulaire incorpore l'établissement du rapport (j) entre ledit couple (M) et ladite accélération angulaire (ω̇₁).

26. Programme informatique (P) selon la revendication 25, comprenant l'étape de détermination du fait que ledit rapport (j) coïncide ou non avec le moment d'inertie de l'arbre d'entrée de boîte de vitesses, de façon à déterminer ainsi ledit état de la boîte de vitesses.

27. Programme informatique (P) selon l'une quelconque des revendications 21 à 26, comprenant l'étape de détermination au moins une fois de plus de l'état en fonction de valeurs de couple (M) et d'accélération angulaire (ω̇₁) remises à jour.

28. Programme informatique (P) selon l'une quelconque des revendications 21 à 27, comprenant l'étape de détection d'un état neutre de la boîte de vitesses.

29. Programme informatique (P) selon l'une quelconque des revendications 21 à 28, si l'état déterminé indique qu'une vitesse de la boîte de vitesses du véhicule est en prise, comprenant l'étape consistant à prendre des mesures qui incorporent l'étranglement de l'alimentation en carburant au moteur et/ou l'interruption du train d'entraînement et/ou la délivrance d'indications pour rendre le conducteur conscient de l'état déterminé.

30. Produit de programme informatique comprenant un code de programme mémorisé sur un support lisible par un ordinateur pour effectuer les étapes de procédé selon les revendications 1 à 9, ce programme informatique étant exécuté sur une unité de commande électronique (200) ou un autre ordinateur (210) connecté à l'unité de commande électronique.
